# EUROPÄISCHE PATENTSCHRIFT

(11) **EP 2 218 593 B1**
(45) Veröffentlichungstag und Bekanntmachung des Hinweises auf die Patenterteilung: **27.08.2014**
(21) Anmeldenummer: 09015345.3
(22) Anmeldetag: 11.12.2009
(51) Int. Cl.: B60D 5/00, B62D 33/06, B62D 33/063, B62D 47/02

(54) **Lagerung eines Nutzfahrzeugfahrerhauses**
Mounting of an industrial vehicle driver's cab
Agencement d'une cabine conducteur de véhicule utilitaire

(30) Priorität: 11.02.2009 DE 102009008495
(43) Veröffentlichungstag der Anmeldung: 18.08.2010
(73) Patentinhaber: MAN Truck & Bus AG, 80995 München (DE)
(72) Erfinder: Butscher, Jochen, 81371 München (DE); Mangold, Markus, 85221 Dachau (DE); Mendler, Hardy, 85221 Dachau (DE); Gründinger, Christian, 80803 München (DE); Ille, Thomas, 82223 Eichenau (DE); Beck, Klaus, 82278 Althegnenberg (DE)

(56) Entgegenhaltungen:
- DE-A1- 19 943 539
- US-A- 2 843 417
- US-A- 4 121 684
- US-A- 5 280 984

## Beschreibung

Die Erfindung bezieht sich auf ein Nutzfahrzeug, bei dem das Fahrerhaus einen, einschließlich des Fahrersitzes, sämtliche zum Fahrbetrieb gehörende Funktionen umfassenden Fahrerarbeitsplatzbereich und einen Wohnbereich aufnimmt, gemäß den Merkmalen des Oberbegriffs des Anspruchs 1.

Aus der EP 0 563 526 ist eine Fahrerhausbaureihe modularen Aufbaus bei Lastkraftwagen mit Fahrerhäusern unterschiedlicher Längen-, Breiten- und Höhenabmessungen bekannt. Hierbei werden bei allen Baureihen einheitliche Fahrerhaustüren und dazu angepasste Fahrerhausteile, wie die Fahrerhausvorderwand, die Fahrerhausrückwand, Seitenteile und Dachaufsätze verwendet. Die Fahrerhaustür und die Fahrerhausseitenteile sind in allen Varianten einstückig aus einem Grundkörper gefertigt. Die verschiedenen Dachaufsätze sind wahlweise, mit oder ohne Zwischenteilen lösbar oder nicht lösbar, mit dem einheitlichen Fahrerhausgrundkörper verbindbar. Die Fahrerhausseitenwände und die Fahrerhausrückwand sind im Anschlussbereich des Dachaufsatzes als ein auf drei Seiten umlaufender, die Dachaufsatzzone versteifender Profilrahmen ausgebildet. Der Profilrahmen und die Fahrerhausvorderwandseite sind durch einen separaten Profilbügel allseitig geschlossen. Der Profilbügel ist mit den Vorderwandsäulen fest verbunden oder in mit den Vorderwandsäulen fest verbundenen, diese verstärkenden Rohre/Profile einsteckbar.

Im modernen Nutzfahrzeugbau erhalten die Fahrzeuge, je nachdem ob sie für den Femverkehr oder z. B. für den lokalen Lieferverkehr vorgesehen sind unterschiedlich dimensionierte Fahrerhäuser. In einem großen für den Fernverkehr dimensionierten Fahrerhaus ist der dem Fahrer in der Ruhephase zur Verfügung stehende Wohnbereich dennoch knapp bemessen. Der Wohnbereich unterliegt den Beschränkungen, die durch die Länge des Fahrgestellrahmens und durch die Anforderung, das Ladevolumen des Fahrzeugs zu maximieren, vorgegeben sind.

Fahrerhäuser heutiger Nutzfahrzeuge sind gegenüber dem Fahrgestell über Feder-Dämpfer-Beine stoß- und vibrationsgedämpft. Eine Positionierung des Fahrerhauses über Feder-Dämpfer-Beine auf dem Fahrgestell des Nutzfahrzeugs führt dazu, dass Schwingungen aus dem Fahrgestell direkt in das Nutzfahrzeug-Fahrerhaus eingeleitet werden können.

Aus der DE 199 43 539 A1 ist eine Fahrerkabine für einen Lastkraftwagen bekannt, deren Innenraum durch ein Modul vergrößerbar ist. Das Modul umfaßt wenigstens ein zur Außenhaut der Fahrerkabine gehörendes Abdeckelement und ist zur Vergrößerung des Kabinenvolumens aus einer eingefahrenen Gebrauchsstellung in eine ausgefahrene Gebrauchsstellung verlagerbar. Dabei ist der Freiraum zwischen den Umfangsseiten des Moduls und den korrespondierenden Umfangsseiten der Fahrerkabine in der ausgefahrenen Gebrauchsstellung durch Abdeckelemente geschlossen. Das Abdeckelement des Moduls umfaßt mindestens einen Wandbereich einer Stirnwand der Fahrerkabine und ist in der ausgefahrenen Gebrauchsstellung in Fahrzeuglängsrichtung verlagert. Als Abdeckelemente können auch faltenbalgartig zusammenlegbare Gewebe verwendet werden.

Der Erfindung liegt die Aufgabe zugrunde, ein Fahrerhaus zu schaffen, das unabhängig von der Länge des Fahrgestellrahmens und unabhängig von der Länge des Aufbaus dem Fahrer in der Ruhephase ausreichend Wohnraum bietet und gleichzeitig im Fahrbetrieb eine verbesserte Schwingungsentkoppelung des Fahrerhauses vom Fahrgestellrahmen ermöglicht.

Die Aufgabe wird erfindungsgemäß durch die Merkmale des Anspruchs 1 gelöst.

Demzufolge nimmt das Fahrerhaus einen, einschließlich des Fahrersitzes, sämtliche zum Fahrbetrieb gehörenden Funktionen umfassenden Fahrerarbeitsplatzbereich und einen Wohnbereich auf. Die gegeneinander gerichteten Fahrerhausaußenwände der beiden Bereiche sind dabei durch einen umlaufenden dehnbaren Faltenbalg miteinander verbunden, wobei der Fahrerarbeitsplatzbereich und der Wohnbereich als voneinander funktionell geteilte Bereiche ausgeführt sind. Des Weiteren ist der Wohnbereich des Fahrerhauses ungefedert auf einem Fahrgestellrahmen gelagert, während der gegenüber dem Fahrgestellrahmen abgefederte Fahrerarbeitsplatzbereich gegenüber dem Wohnbereich horizontal und/oder vertikal verschiebbar angeordnet ist.

Das erfindungsgemäße Fahrerhaus ist somit im Gegensatz zu einem konventionellen Nutzfahrzeug in zwei funktionelle Bereiche unterteilt. Dies ist zum einen der Fahrerarbeitsplatzbereich, der einschließlich des Fahrersitzes alle zum Fahrbetrieb gehörenden Funktionen umfasst. Zum anderen nimmt das Fahrerhaus den Wohnbereich auf, in dem z. B. die Betten und alle weiteren Komponenten angeordnet sind, die nicht unmittelbar für den Fahrbetrieb des Nutzfahrzeugs erforderlich sind.

Gemäß der Erfindung ist der Wohnbereich des Fahrerhauses ungefedert auf dem Fahrgestellrahmen gelagert. Hierdurch kann eine verbesserte Schwingungsentkoppelung des Fahrerarbeitsplatzbereiches erreicht werden, da die Längs- und die Queranlenkung des Fahrerarbeitsplatzbereiches über die Anlenkung eines teilentkoppelten Wohnbereichs erfolgt. Der Wohnbereich ist dabei möglichst steif mit dem Fahrgestellrahmen zu verbinden und nur geringfügig gegen Vibrationen zu entkoppeln, um nicht einen Resonanzkörper zu bilden. Der Wohnbereich des Fahrerhauses ist im Stillstand, in der Ruhephase des Nutzfahrzeugs zur Benutzung vorgesehen. Durch die steife Anbindung des den Wohnbereich umfassenden Fahrerhausbereichs wirkt der Boden des Wohnbereiches als rahmenversteifendes Element. Durch die erfindungsgemäße Bauweise des Fahrerhauses ist der so genannte Schwedentest leichter erfüllbar. Da nicht mehr das gesamte Fahrerhaus gegen die entsprechenden Lasten abzusichern ist, lassen sich Gewichtsvorteile realisieren.

Der Fahrerarbeitsplatzbereich ist über wenigstens ein Feder-Dämpfer-Element auf dem Fahrgestellrahmen gelagert. Zur vertikalen Federung bzw. Dämpfung sind alle möglichen Federvorrichtungen wie z. B. Luftfederungen, Schraubenfedern, Blattfedern, Drehstabfedern, Öldämpferfederelemente oder Luftfederdämpfer denkbar. Der Bereich des Fahrerhauses, der den Fahrerarbeitsplatzbereich umfasst kann gegenüber dem, den Wohnbereich aufnehmenden Bereich des Fahrerhauses und/oder gegenüber dem Fahrgestell des Nutzfahrzeugs z. B. mittels parallel angeordneter Längslenker oder über fest eingespannte Blattfedern längs- und quergeführt sein. Denkbar ist auch eine Vertikalführung des Fahrerarbeitsplatzbereiches über ein kugel- oder rollengelagertes Schienensystemen.

Durch die kinematische Anlenkung des Fahrerarbeitsplatzbereichs am Wohnbereich ist auch eine Verringerung der Nick- bzw. Wankbewegung des Fahrerhauses gegenüber dem Fahrgestell in und quer zur Fahrtrichtung erreichbar. Der Fahrerarbeitsplatzbereich und der Wohnbereich sind über einen umlaufenden, dehnbaren Faltenbalg miteinander verbunden. Anstatt eines Faltenbalgs ist auch ein Rollbalg oder jede andere Manschette einsetzbar, die die beiden Bereiche gegeneinander abfedern, dämpfen und abdichten kann.

Im Weiteren wird beispielhaft von einem Faltenbalg ausgegangen. Dieser gewährleistet den erforderlichen Schallschutz zwischen dem Wohnbereich und dem Fahrerarbeitsplatzbereich. Gleichzeitig ist der erforderliche Lichteinlass und die gewünschte Lichtleitung gewährleistet. Der Faltenbalg kann auch als Crash-Element zur Absorption der Aufprallenergie dienen. Die Luftbefüllung des den Fahrerarbeitsplatzbereich mit dem Wohnbereich verbindenden Faltenbalgs ergibt eine regelbare Steifigkeit des Faltenbalgs und beeinflusst dadurch unmittelbar den vom Fahrer gewünschten Komfort. Mögliche Undichtigkeiten bzw. Quietschgeräusche des Faltenbalgs können durch die Wahl eines geeigneten Herstellungsmaterials verhindert werden.

Zwischen dem Fahrerarbeitsplatzbereich und dem Wohnbereich ist eine quer zur Fahrzeuglängsachse verlaufende Zwischenwand einziehbar, die eine Tür aufweisen kann. Die Zwischenwand dient dabei der Schallentkopplung des Wohnbereichs vom Fahrerarbeitsplatzbereich. Als Tür kann auch eine Platz sparende Schiebetür verwendet werden. Die Zwischenwand sowie die Tür können dabei aus transparentem Material bestehen oder aber undurchsichtig sein.

Über die Längslenker-Kinematik kann der Fahrerarbeitsplatzbereich des Fahrerhauses während des Fahrbetriebs umkehrbar horizontal an den Wohnbereich herangeschoben und mit diesem verankert werden. Der Faltenbalg dichtet dabei den Fahrerarbeitsplatzbereich gegen den Wohnbereich ab. Auf diese Weise wird die gesetzlich vorgeschriebene Fahrzeuglänge eingehalten.

In der Ruhephase des Nutzfahrzeugs ist der Fahrerarbeitsplatzbereich aus seiner Verankerung am Wohnbereich lösbar und in Fahrtrichtung horizontal verschiebbar. Im Stand ergibt sich dadurch durch Herausfahren des Bereiches des Fahrerhauses, der den Fahrerarbeitsplatzbereich aufnimmt, ein zusätzlicher Platzgewinn für den Wohnbereich. Da sich die zu federnde Masse auf den Fahrerarbeitsplatzbereich beschränkt und somit deutlich verkleinert ist, ist eine technisch weniger aufwendige und insofern kostengünstigere Fahrerhauslagerung verwendbar.

Durch die Anlenkung des Fahrerarbeitsplatzbereiches an dem Teil des Fahrerhauses, der den Wohnbereich aufnimmt, kann eine verbesserte Schwingungsentkopplung des Fahrerarbeitsplatzbereiches ermöglicht werden. Die erfindungsgemäße Aufhängung des Fahrerhauses ermöglicht überdies, kostengünstigere Fahrersitze mit reduzierten Sitzfederungen zu verwenden. Der Beifahrerbereich kann entweder dem Fahrerarbeitsplatzbereich zugeschlagen werden oder in den Wohnbereich integriert sein. Wahlweise können die Schlafbetten auf der Beifahrerseite längs im Fahrzeug angeordnet sein, sodass der Sitz des Beifahrers hinter dem Fahrersitz anzuordnen wäre. Aufgrund der geringeren Feder-Dämpfung des Fahrerhauses gegenüber dem Fahrgestell muss der Fahrgestellrahmen des Nutzfahrzeugs nicht mehr bis zur Vorderkante des Fahrerhauses geführt werden.

Nach einer weiteren Ausführungsform der Erfindung sind die seitlichen Fahrerhausaußenwände des Fahrerarbeitsplatzbereichs über je ein Lenkerpaar kinematisch mit den Fahrerhausaußenwänden des Wohnbereichs verbunden. Der Fahrerarbeitsplatzbereich ist entsprechend der Dehnbarkeit des Faltenbalgs gegenüber den Fahrerhausaußenwänden des Wohnbereichs horizontal und/oder vertikal verschiebbar gelagert. Zur Freigabe des Motors sowie des Antriebsstrangs ist der Fahrerarbeitsplatzbereich gegenüber dem Fahrgestell und dem Bereich des Fahrerhauses, der den Wohnbereich aufnimmt vertikal verschiebbar gelagert. Um den Zugang zum Motor und zum Antriebsstrang zu ermöglichen, muss das Fahrerhaus nicht mehr wie bei Fahrzeugen aus dem Stand der Technik nach vorne übergekippt werden, sondern es kann der Bereich des Fahrerhauses, der den Fahrerarbeitsplatzbereich aufnimmt horizontal gegenüber dem Wohnbereich verschoben werden. Es ist weiterhin denkbar, zu Wartungs- und Reparaturzwecken den Bereich des Fahrerhauses, der den Fahrerarbeitsplatzbereich umgibt, gegenüber dem Fahrgestellrahmen vertikal zu verschieben.

In einer weiteren Ausführungsform der Erfindung sind die Lenkerpaare um ihre Anlenkpunkte an den Fahrerhausaußenwänden des Wohnbereichs zum Anheben des Fahrerhauses nach oben verschwenkbar. Die Lenkerpaare können hydraulische Stützen sein, die das Fahrerhaus in einer Wartungsposition oberhalb und beabstandet vom Fahrgestellrahmen sicher abstützen und halten.

Eine andere Ausführungsform der Erfindung sieht vor, dass der Fahrerarbeitsplatzbereich aus einer horizontalen Betriebsposition heraus gegenüber dem Fahrgestellrahmen absenkbar ist. Das erfindungsgemäße Fahrerhaus kann somit in einem Low-Entry-Fahrzeug eingesetzt werden, bei dem das Fahrerhaus zum Ein- und Aussteigen absenkbar ist.

Weitere Merkmale, Einzelheiten und Vorteile der Erfindung ergeben sich aus der folgenden Beschreibung verschiedener Ausführungsformen der Erfindung sowie anhand der Zeichnung. Hierbei zeigen:
- Fig. 1: in schematischer Darstellung das erfindungsgemäße Fahrerhaus mit horizontal verschobenem Wohnbereich,
- Fig. 2: das erfindungsgemäße Fahrerhaus mit einem in Betriebsposition befindlichen Fahrerarbeitsplatzbereich,
- Fig. 3: das erfindungsgemäße Fahrerhaus mit einem vertikal verschobenen Fahrerarbeitsplatzbereich und
- Fig. 4: in perspektivischer Gesamtdarstellung das erfindungsgemäße Fahrerhaus mit Fahrerarbeitsplatzbereich und Wohnbereich.

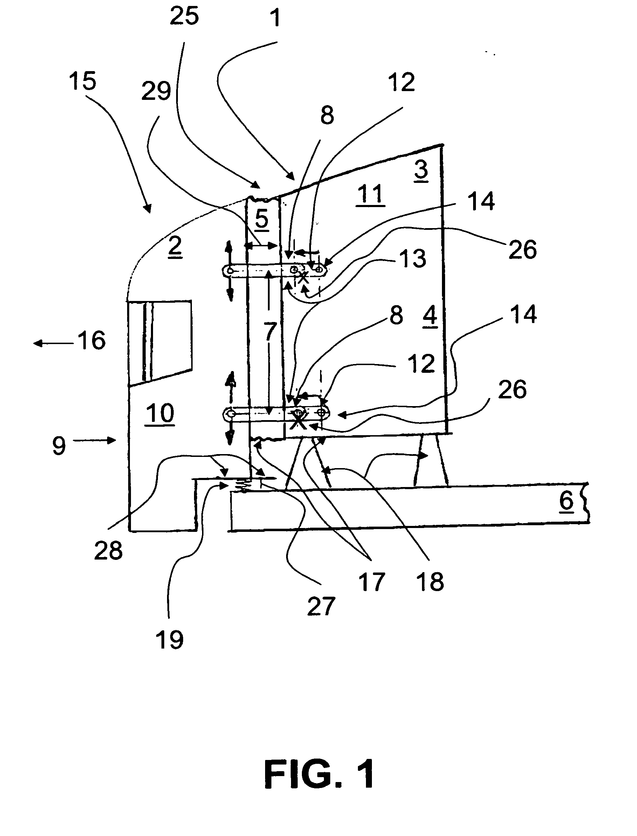

Fig. 1 zeigt ein erfindungsgemäßes Fahrerhaus 1 mit einem Fahrerarbeitsplatzbereich 2 sowie einem Wohnbereich 3. Ein Faltenbalg 5 dient der Verbindung des Fahrerarbeitsplatzbereiches 2 mit dem Wohnbereich 3. Der Bereich 10 des Fahrerhauses 1, der den Fahrerarbeitsplatzbereich 2 aufnimmt ist mit dem Bereich 11 des Fahrerhauses 1, der den Wohnbereich 3 aufnimmt über Lenkerpaare 7 kinematisch verbunden. Die Lenkerpaare 7 sind dabei in Kulissen 12 beweglich angelenkt, die in den seitlichen Fahrerhausaußenwänden 4 des Bereiches 11 des Fahrerhauses 1 angeordnet sind, die den Wohnbereich 3 aufnehmen. Der den Fahrerarbeitsplatz 2 aufnehmende Bereich 10 des Fahrerhauses 1 ist mit dem Bereich 11 des Fahrerhauses 1, der den Wohnbereich 3 aufnimmt über einen Faltenbalg 5 verbunden. In den Kulissen 12 der Fahrerhausaußenwände 4 sind Rastpunkte 13; 14 vorgesehen. In der Fig. 1 ist der Bereich 10 des Fahrerhauses 1 mit dem Fahrerarbeitsplatzbereich 2 in Ruheposition 15 dargestellt. Die Lenkerpaare 7, die den Fahrerarbeitsplatz 2 gegenüber dem Wohnbereich 3 führen sind in etwa achsparallel zum Fahrgestellrahmen 6 in Fahrtrichtung 16 horizontal verschoben. Die Anlenkpunkte 8 der Lenkerpaare 7 an den Fahrerhausaußenwänden des Bereiches 11 des Fahrerhauses 1, der den Wohnbereich 3 aufnimmt, befinden sich an den Rastpunkten 13. In dieser Position wird der Fahrerarbeitsplatzbereich 2 über die Lenkerpaare 7 horizontal und vertikal positionsstabil am Wohnbereich 3 gehalten. Der Faltenbalg 5 gibt in der Fig. 1 mit seiner maximalen horizontalen Ausdehnung 29 die maximal mögliche horizontale Beabstandung des Fahrerarbeitsplatzbereichs 2 vom Wohnbereich 3 des Fahrerhauses 1 vor. Der Fahrerhausboden 17 ist im Bereich des Faltenbalgs 5 horizontal ausfahrbar um der horizontalen Verschiebung des Bereichs 10 des Fahrerhauses 1 in Fahrtrichtung 16 zu folgen. Im Gegensatz zu dem auf Stützen 18 gelagerten Wohnbereich 3 ist in Fig. 1 der Fahrerarbeitsplatzbereich 2 des Fahrerhauses 1 über Feder-Dämpfer-Beine 19 am Fahrgestellrahmen 6 federbar gelagert. Hierdurch und durch die Anlenkung des Fahrerarbeitsplatzbereichs 2 über die Lenkerpaare 7 am Wohnbereich 3 des Fahrerhauses 1 wird eine maximale Schwingungsentkopplung des den Fahrerarbeitsplatzbereich 2 aufnehmenden Bereichs 10 des Fahrerhauses 1 erreicht.

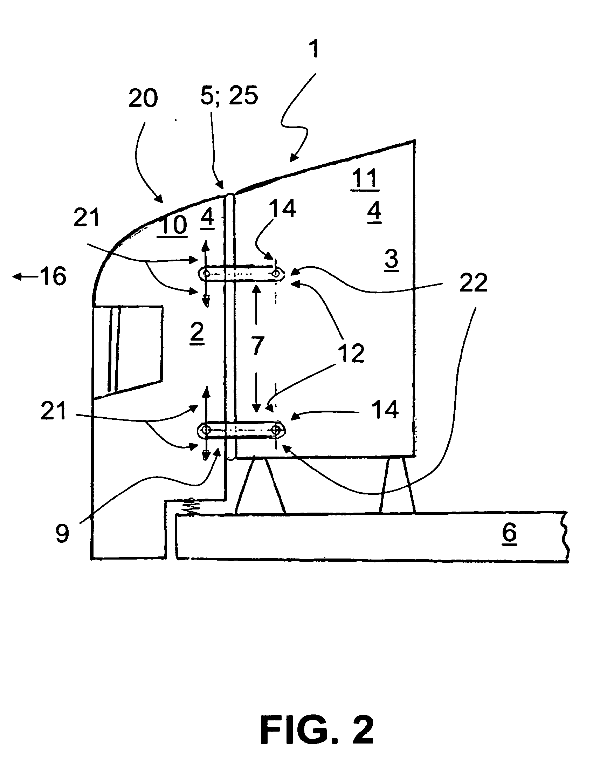

Fig. 2 zeigt das erfindungsgemäße Fahrerhaus 1 entsprechend der Fig. 1 mit dem Unterschied, dass der Bereich 10 des Fahrerhauses 1, der den Fahrerarbeitsplatzbereich 2 aufnimmt, in Betriebsposition 20 steht und über den Faltenbalg 5 mit dem den Wohnbereich 3 aufnehmenden Bereich 11 des Fahrerhauses 1 verbunden ist. Die Lenkerpaare 7 sind dabei entgegen der Fahrtrichtung 16 in die Kulisse 12 eingefahren und im Rastpunkt 14 befestigt. In der Betriebsposition 20 des Fahrerarbeitsplatzbereiches 2 nimmt der Faltenbalg 5 in horizontaler Richtung gesehen seine minimale Ausdehnung ein und dichtet die Fahrerhausauβenwände 4 des Fahrerarbeitsplatzbereiches 2 und des Wohnbereiches 3 gegeneinander ab. Die Pfeile 21 verdeutlichen in Fig. 2, dass der Bereich 10 des Fahrerhauses 1, der den Fahrerarbeitsplatzbereich 2 umfasst aus der Betriebsposition 20 in etwa vertikal zum Bereich 11 des Fahrerhauses 1 verschwenkt werden kann. Die Schwenkachsen 22 verlaufen dabei quer zur Fahrtrichtung 16 durch die Rastpunkte 14. Der Bereich 10 des Fahrerhauses 1 ist in Betriebsposition 20 gegenüber dem Fahrgestellrahmen 6 federbar gelagert.

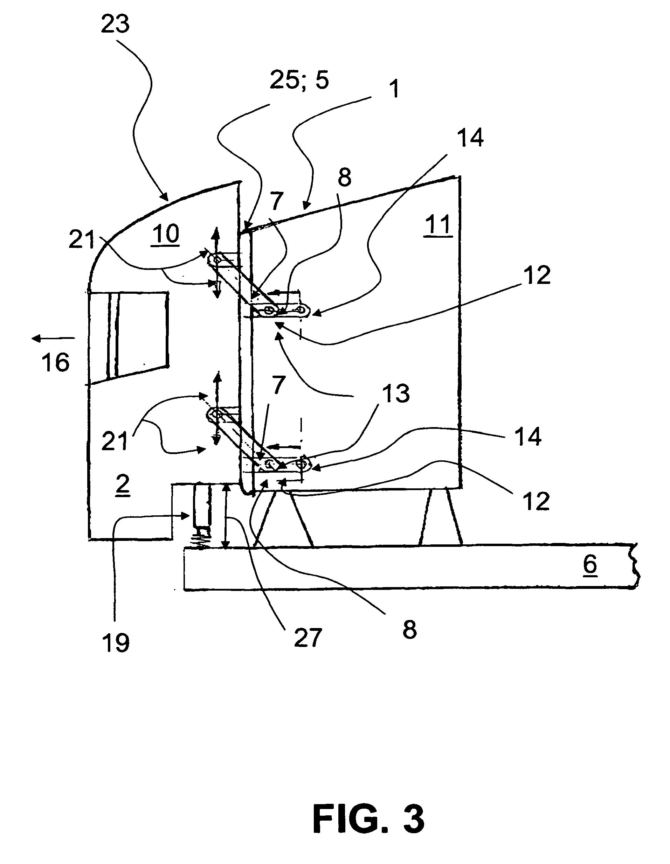

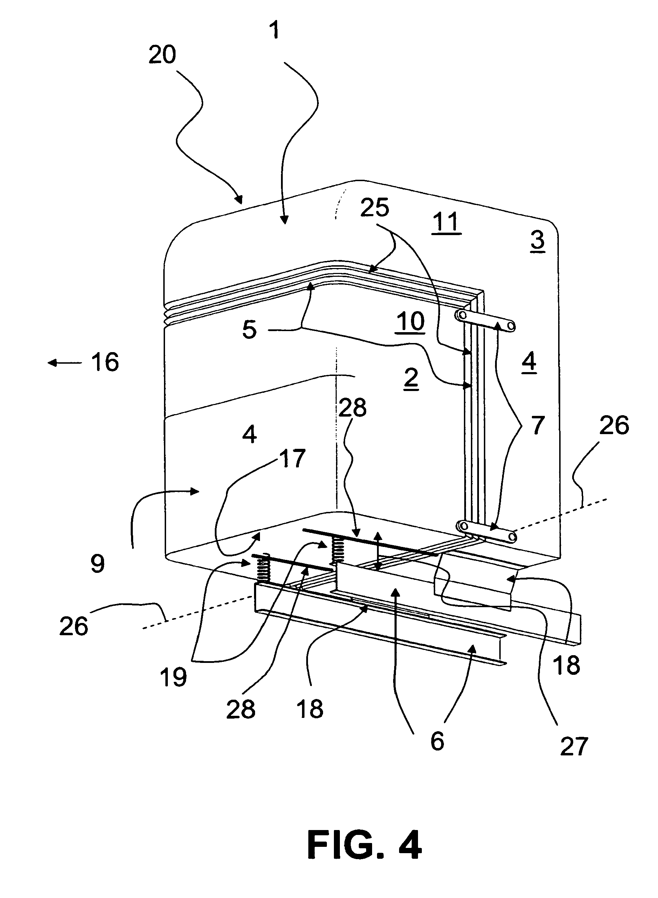

Fig. 3 zeigt ein erfindungsgemäßes Fahrerhaus 1 entsprechend Fig. 2, mit dem Unterschied, dass der Bereich 10 des Fahrerhauses 1, der den Fahrerarbeitsplatzbereich 2 umfasst aus einer Betriebsposition 20 (vgl. Fig. 2) in eine erhöhte Position 23 verschwenkt ist und einen Abstand 27 zum Fahrgestellrahmen 6 einnimmt (vgl. auch Fig. 4). Die Anlenkpunkte 8 der Lenkerpaare 7 in den Kulissen 12 haben die Rastpunkte 14 verlassen und die Rastpunkte 13 eingenommen. Der den Fahrerarbeitsplatzbereich 2 aufnehmende Bereich 10 des Fahrerhauses 1 ist gegenüber dem Bereich 11 des Fahrerhauses 1 über die Lenkerpaare 7 in etwa vertikal schwenkbar gelagert. Der Schwenkpunkt der Lenkerpaare 7 verläuft dabei quer zur Fahrtrichtung 16 durch die Anlenkpunkte 8 der Lenkerpaare 7 im Bereich der Rastpunkte 13. Die Pfeile 21 verdeutlichen, dass der Bereich 10 des Fahrerhauses 1 mit dem Fahrerarbeitsplatzbereich 2 vertikal zum Fahrgestellrahmen 6 aus einer horizontalen Stellung 9 (vgl. Fig. 1, 2 und 4) durch das Feder-Dämpfer-Bein 19 anhebbar und absenkbar ist. In den Fig. 2 und 3 ist der Faltenbalg 5 im horizontalen Spalt 25 erkennbar.

Fig. 4 zeigt in perspektivischer Darstellung eine schematische Ansicht des erfindungsgemäßen Fahrerhauses 1 mit den Bereichen 10 bzw. 11, die jeweils den Fahrerarbeitsplatzbereich 2 bzw. den Wohnbereich 3 des Fahrerhauses 1 aufnehmen. Die das Fahrerhaus 1 umschließenden Fahrerhausaußenwände sind mit Ziffer 4 bezeichnet. Die Lenkerpaare 7 ermöglichen die erfindungsgemäße horizontale und/oder vertikale Verschiebung des Fahrerarbeitsplatzbereiches 2 gegenüber dem Wohnbereich 3 und dem Fahrgestellrahmen 6. Der Faltenbalg 5 ist in Fig. 4 manschettenförmig dargestellt und verläuft im Übergangsbereich zwischen dem Bereich 10 und dem Bereich 11 des Fahrerhauses 1 horizontal und vertikal. Das Fahrerhaus 1 ist oberhalb des Fahrgestellrahmens 6 angeordnet. Der Bereich 10 des Fahrerhauses 1, der den Fahrerarbeitsplatzbereich 2 aufnimmt ist mittels Feder-Dämpfer-Beinen 19 gegenüber dem Fahrgestellrahmen 6 federbar gelagert. Der in Fahrtrichtung 16 gesehen rückwärtige Bereich 11 des Fahrerhauses 1, der den Wohnbereich 3 aufnimmt ist ungefedert über Stützen 18 am Fahrgestellrahmen 6 befestigt. Entgegen herkömmlichen Nutzfahrzeug-Fahrerhäusern ragt das Fahrerhaus 1 in Fig. 4 in Fahrtrichtung 16 gesehen etwa mit der Hälfte des Fahrerarbeitsplatzbereichs 2 über den Fahrgestellrahmen 6 hinaus. Aus Fig. 1 und Fig. 4 ist zu erkennen, dass der dehnbare Faltenbalg 5 im Rahmen seiner horizontalen und/oder vertikalen Dehnbarkeit den variablen Spalt 25 zwischen dem Fahrerarbeitsplatzbereich 2 und dem Wohnbereich 3 auszugleichen in der Lage ist. Zum Ausgleich des variablen Spaltes 25 ist der Fahrerhausboden 17 in und entgegen der Fahrtrichtung 16 horizontal ein- und ausfahrbar. Zum Ausgleich des veränderbaren vertikalen Abstands 27 des den Fahrerarbeitsplatzbereich 2 aufnehmenden Bereichs 10 des Fahrerhauses 1 gegenüber dem Fahrgestellrahmen 6 ist der Fahrerhausboden 17 um eine quer zur Fahrtrichtung 16 verlaufende Schwenkachse 26 im Bereich des Spaltes 25 vertikal schwenkbar gelagert. Der den Fahrerarbeitsplatzbereich 2 aufnehmende Bereich 10 des Fahrerhauses 1 ist gegenüber dem ortsfesten Feder-Dämpfer-Bein 19 über Führungsschienen 28 horizontal verschiebbar geführt (vergleiche auch Fig. 1).

### Bezugsziffern:

- 1: Fahrerhaus
- 2: Fahrerarbeitsplatzbereich
- 3: Wohnbereich
- 4: Fahrerhausaußenwand
- 5: Faltenbalg
- 6: Fahrgestellrahmen
- 7: Lenkerpaar
- 8: Anlenkpunkt
- 9: horizontale Stellung
- 10: Fahrerhausbereich
- 11: Fahrerhausbereich
- 12: Kulisse
- 13: Rastpunkt
- 14: Rastpunkt
- 15: Ruheposition
- 16: Fahrtrichtung
- 17: Fahrerhausboden
- 18: Stütze
- 19: Feder-Dämpfer-Bein
- 20: Betriebsposition
- 21: Pfeil
- 22: Schwenkachse
- 23: erhöhte Position
- 24:
- 25: Spalt
- 26: Schwenkachse Fahrerhausboden
- 27: Abstand
- 28: Führungsschiene
- 29: maximale horizontale Ausdehnung des Faltenbalgs

## Patentansprüche

1. Nutzfahrzeug, bei dem das Fahrerhaus (1) einen, einschließlich des Fahrersitzes, sämtliche zum Fahrbetrieb gehörende Funktionen umfassenden Fahrerarbeitsplatzbereich (2) und einen Wohnbereich (3) aufnimmt, wobei die gegeneinander gerichteten Fahrerhausaußenwände (4) der beiden Bereiche (2; 3) durch einen umlaufenden dehnbaren Faltenbalg (5) mit einander verbunden sind, **dadurch gekennzeichnet, dass** der Fahrerarbeitsplatzbereich (2) und der Wohnbereich (3) als funktionell voneinander geteilte Bereiche ausgeführt sind, wobei der Wohnbereich (3) des Fahrerhauses (1) ungefedert auf einem Fahrgestellrahmen (6) gelagert und der gegenüber dem Fahrgestellrahmen (6) abgefederte Fahrerarbeitsplatzbereich (2) gegenüber dem Wohnbereich (3) horizontal und/oder vertikal verschiebbar angeordnet ist.

2. Nutzfahrzeug nach Anspruch 1, **dadurch gekennzeichnet, dass** seitliche Fahrerhausaußenwände (4) des Fahrerarbeitsplatzbereichs (2) über je ein Lenkerpaar (7) kinematisch mit Fahrerhausaußenwänden (4) des Wohnbereichs (3) verbunden sind, und dass der Fahrerarbeitsplatzbereich (2) entsprechend der Dehnung des Faltenbalgs (5) gegenüber den Fahrerhausaußenwänden (4) des Wohnbereichs (3) horizontal und/oder vertikal verschiebbar gelagert ist.

3. Nutzfahrzeug nach Anspruch 2, **dadurch gekennzeichnet, dass** die Lenkerpaare (7) um ihre Anlenkpunkte (8) an den Fahrerhausaußenwänden (4) des Wohnbereichs (3) zum Anheben des Fahrerhauses (1) nach oben verschwenkbar sind.

4. Nutzfahrzeug nach Anspruch 1, **dadurch gekennzeichnet, dass** der Fahrerarbeitsplatzbereich (2) aus seiner horizontalen Stellung gegenüber dem Fahrgestellrahmen (6) absenkbar ist.

## Claims

1. An industrial vehicle, in which the driver's cab (1) accommodates a driver's workplace area (2) comprising all of the functions belonging to the driving operation and including the driver's seat, and a living area (3), wherein those driver's cab outer walls (4) of the two areas (2; 3) that are directed towards each other are connected to each other by an encircling, expandable expansion bellows (5), **characterized in that** the driver's workplace area (2) and the living area (3) are designed as areas which are divided functionally from each other, wherein the living area (3) of the driver's cab (1) is mounted unsprung on a chassis frame (6), and the driver's workplace area (2), which is spring-mounted in relation to the chassis frame (6), is arranged in a horizontally and/or vertically displaceable manner in relation to the living area (3).

2. The industrial vehicle according to Claim 1, **characterized in that** lateral driver's cab outer walls (4) of the driver's workplace area (2) are kinematically connected to driver's cab outer walls (4) of the living area (3) via a pair of links (7) in each case, and **in that** the driver's workplace area (2) is mounted in a horizontally and/or vertically displaceable manner in relation to the driver's cab outer walls (4) of the living area (3) corresponding to the expansion of the expansion bellows (5).

3. The industrial vehicle according to Claim 2, **characterized in that** the pairs of links (7) are pivotable about the coupling points (8) thereof on the driver's cab outer walls (4) of the living area (3) in order to raise the driver's cab (1) upwards.

4. The industrial vehicle according to Claim 1, **characterized in that** the driver's workplace area (2) is lowerable from the horizontal position thereof in relation to the chassis frame (6).

## Revendications

1. Véhicule utilitaire, dans lequel la cabine de conducteur (1) reçoit une zone de poste de travail de conducteur (2) comprenant, en plus du siège du conducteur, toutes les fonctions appartenant au fonctionnement de conduite et une zone d'habitacle (3), les parois extérieures (4) de la cabine de conducteur des deux zones (2 ; 3) orientées à l'opposé l'une de l'autre étant connectées les unes aux autres par un soufflet extensible périphérique (5), **caractérisé en ce que** la zone de poste de travail de conducteur (2) et la zone d'habitacle (3) sont réalisées sous forme de zones séparées fonctionnellement l'une de l'autre, la zone d'habitacle (3) de la cabine de conducteur (1) étant supportée sans suspension sur un châssis de conduite (6) et la zone de poste de travail de conducteur (2) suspendue sur ressort par rapport au châssis de conduite (6) étant disposée de manière déplaçable horizontalement et/ou verticalement par rapport à la zone d'habitacle (3).

2. Véhicule utilitaire selon la revendication 1, **caractérisé en ce que** des parois extérieures latérales (4) de la cabine de conducteur de la zone de poste de travail de conducteur (2) sont connectées cinématiquement à des parois extérieures (4) de la cabine de conducteur de la zone d'habitacle (3) par le biais d'une paire respective de bras oscillants (7), et **en ce que** la zone de poste de travail de conducteur (2) est supportée de manière déplaçable horizontalement et/ou verticalement par rapport aux parois extérieures (4) de la cabine de conducteur de la zone d'habitacle (3) de manière correspondant à l'étendue du soufflet (5).

3. Véhicule utilitaire selon la revendication 2, **caractérisé en ce que** les paires de bras oscillants (7) peuvent pivoter vers le haut autour de leurs points d'articulation (8) aux parois extérieures (4) de la cabine de conducteur de la zone d'habitacle (3) pour soulever la cabine de conducteur (1).

4. Véhicule utilitaire selon la revendication 1, **caractérisé en ce que** la zone de poste de travail de conducteur (2) peut être abaissée depuis sa position horizontale par rapport au châssis de conduite (6).
